# EUROPÄISCHE PATENTSCHRIFT

(11) **EP 1 608 540 B1**
(45) Veröffentlichungstag und Bekanntmachung des Hinweises auf die Patenterteilung: **07.12.2011**
(21) Anmeldenummer: 04714735.0
(22) Anmeldetag: 26.02.2004
(51) Int. Cl.: B60S 1/00

(54) **HÖHENVERSTELLBARE STÜTZE FÜR SATTELAUFLIEGER ODER DERGLEICHEN**
HEIGHT-ADJUSTABLE SUPPORT FOR SEMITRAILERS OR THE LIKE
MONTANT REGLABLE EN HAUTEUR POUR SEMI-REMORQUE OU SIMILAIRE

(30) Priorität: 31.03.2003 DE 20305175 U
(43) Veröffentlichungstag der Anmeldung: 28.12.2005
(73) Patentinhaber: SAF-HOLLAND Verkehrstechnik GmbH, 78224 Singen-Hohentwiel (DE)
(72) Erfinder: RIEDL, Reinhold, 63897 Miltenberg (DE)
(74) Vertreter: Bauer, Clemens
(86) Internationale Anmeldenummer: PCT/EP2004/001891
(87) Internationale Veröffentlichungsnummer: WO 2004/087475

(56) Entgegenhaltungen:
- EP-A- 0 513 973
- EP-A- 0 529 544
- DE-A- 19 616 704
- FR-A- 1 095 463
- US-A1- 2003 011 182
- US-B1- 6 260 882

## Beschreibung

Die Erfindung bezieht sich auf eine höhenverstellbare Stütze für Sattelauflieger oder dergleichen gemäß dem Oberbegriff des Anspruchs 1.

Derartige Stützen sind, in meist paarweiser Anordnung, am vorderen Bereich des Sattelaufliegers angeordnet.

Ein gattungsgemäßes Stützenpaar ist aus der EP 1 104 369 B1 bekannt. Eine solche so genannte Vorrichtung zum Abstützen eines Aufliegers eines Sattelschleppers weist ein Getriebe auf, bei dem die Getriebeeingangswelle unterhalb der gegenüberliegenden Getriebeausgangswelle angeordnet ist. Neben der Ausgestaltung für den Handbetrieb wird darin auch eine Ausführung mit Motorantrieb vorgeschlagen, bei der jedoch keine Alternativmöglichkeit zum manuellen Betreiben besteht. Diese Vorrichtung ist daher nur für den herkömmlichen manuellen Betrieb oder, in umgestalteter Art, nur für den motorischen Betrieb geeignet. Sie deckt nicht alle neuzeitlichen Anforderungen ab, worauf nachfolgend eingegangen wird.

In der DE 196 16 704 C2 wird eine Antriebsvorrichtung für die Kombination mit manuell antreibbaren so genannten Sattelstützen beschrieben. Dabei wird eine zusätzliche Einheit fallweise an ein notwendiger Weise bereits vorhandenes Schaltgetriebe der Sattelstütze angebaut. Die Zusatzeinheit besteht aus einem Antriebsgehäuse mit weiterer Zahnradstufe und angeflanschtem Antriebsaggregat. Das außenliegende Schaltgetriebe verliert bei dieser Umrüstung seine Schaltfunktion. Außerdem wird danach, ungünstiger Weise, ein manuelles Antreiben der Stütze ausgeschlossen. Ein Handbetrieb ist erst wieder möglich, wenn die beschriebene Zusatzeinheit wieder demontiert und die Antriebswelle mittels Handkurbel zurückgerüstet ist. Derartige Umrüstaktivitäten sind dem reinen Operator nicht zuzumuten. Neben der ungünstigen, aufwendigen und sperrigen Ausführung dieser Zusatzeinheit und der, ohne Ab-/Umbaumaßnahmen, ebenfalls nicht vorhandenen Alternative eines Kraftbetriebs sowie eines Handbetriebs, erfüllt auch diese Konzeption nicht alle neuzeitlichen Anforderungen.

Die heutigen Sattelschlepper mit luftgefederten Hinterachsen sind in der Lage, über die Druckluftfederbälge, ihr Heck mit der darauf befindlichen Sattelkupplung bezüglich der Sattelhöhe zu regulieren und erforderlichen Falls auch den Vorderbereich eines Sattelaufliegers anzuheben. Die Sattelaufliegerstützen werden unbelastet bis zum Boden des Abstellortes ausgefahren bevor der Sattelschlepper abgekoppelt und weggefahren werden kann. Derselbe oder ein mit gleichartiger Luftfederung ausgestatteter Sattelschlepper kann in umgekehrter Weise, nach eventuell erforderlicher Angleichung seiner Sattelhöhe mit dem Heck, unter den abgestellten Sattelauflieger fahren und angekoppelt werden. Grundsätzlich ist heute daher bei dieser Federungs-/Hubtechnik zum Aufsatteln kein Angleichen der Bodenfreiheit des Frontbereichs des Sattelaufliegers an die Sattelhöhe des Sattelschleppers mehr erforderlich und kein Hubvorgang der Stützen notwendig. Das gilt im besonderen, wenn innerhalb so genannter geschlossener Fuhrparks ausschließlich artgleiche Sattelschlepper bzw. höhenmäßig darauf abgestimmte Sattelauflieger vorhanden sind. In einer Reihe von Grenzfällen jedoch, z.B. beim Einsatz von Sattelschleppern mit Blattfederungen und somit quasi fixer Sattelhöhe, muss der Sattelauflieger gegebenenfalls über die Stützen, auch unter Last, auf die Sattelhöhe des Sattelschleppers zu bringen sein. Im Trend zur Zeitersparnis und der Bedienungserleichterung bei zum Einsatz kommenden Kraftantrieben an Stützen für Sattelauflieger muss daher eine Möglichkeit zur Handantriebsmöglichkeit, sowohl aufgrund der geschilderten eventuellen Notwendigkeit eines Höhenangleichs, als auch eines möglichen Defekts am Kraftantrieb, bestehen. Nur so kann bei heutiger Transportlogistik (z. B. just in time) das Ausfallrisiko von Sattelaufliegern vermieden werden.

Die FR 1 095 463 betrifft eine höhenverstellbare Stütze für Sattelauflieger mit einem ortsfest angebrachten Stützenaußenrohr und einem darin längs verschiebbaren Stützeninnenrohr, wobei das Stützeninnenrohr entweder manuell über eine Kurbel oder über einen Motor betrieben werden kann.

Die EP 0 513 973 betrifft eine höhenverstellbare Stütze für Sattelauflieger mit einem ortsfest angebrachten Stützenaussenrohr und einem darin längs verschiebbaren Stützeninnenrohr, wobei das Stützeninnenrohr über eine Welle angetrieben wird, welche mittels eines Getriebes in zwei unterschiedlichen Übersetzungen das Drehmoment auf einen Spindeltrieb in dem Stützeninnenrohr überträgt.

Die EP 0 529 544 betrifft eine Abstützvorrichtung zur Abstützung des Vorderteils eines vom Zugfahrzeug getrennten Sattelaufliegers, wobei die Abstützvorrichtung durch einen motorischen Antrieb zwischen einer verkürzten Fahrstellung und einer verlängerten Stützstellung verstellbar ist.

Der Erfindung liegt die Aufgabe zugrunde, eine kompakte Stütze für Sattelauflieger zu schaffen, die durch Umschaltung motorisch oder manuell betreibbar ist, sowie eine Ausführungsform zu einer entsprechenden paarweisen Kombinationen vorzuschlagen.

Diese Aufgabe ist erfindungsgemäß durch die im Anspruch 1 gekennzeichnete Stütze gelöst.

Der Kraftfluss wird von der gemeinsamen Achse der Getriebeeingangswelle und Getriebeausgangswelle fallweise über eine erste Getriebestufe auf eine dazu parallele Achse übertragen und in jedem Betriebsfall über eine nachfolgende Getriebestufe auf die erstgenannte Achse geführt.

Dank der Erfindung ist es möglich über die Getriebeeingangswelle mittels einer Kurbel im Handbetrieb zu Arbeiten und alternativ den Kraftbetrieb motorisch über eine Getriebestufe von der parallelen Achse aus zu realisieren.

Der zweite große erfindungsgemäße Vorteil besteht durch die gegebene Möglichkeit einer besonders günstigen Übersetzungsanordnung der Getriebestufen. Wenn nämlich z. B. die erste oder und die zweite Getriebestufe jeweils ins Langsame übersetzen, d. h. eine kurze Übersetzung aufweisen, wird in Multiplikation mit dem Übersetzungsverhältnis einer nachfolgenden Kegelradstufe ein günstiges Gesamtübersetzungsverhältnis erzielt, was einen leichten manuellen Betrieb, insbesondere im Lastgang ermöglicht. Und wenn beispielsweise die Einleitung des Kraftflusses von einem Motor aus auf die zweite. Getriebestufe, oder wenn für den Handbetrieb eine Vorstufe vorgesehen wird, entsteht über die Kegelradstufe auf den Spindeltrieb, ein Schnellgang zum lastfreien Ein- oder Ausfahren der Stütze.

Die bis hierher genannten Vorteile werden günstiger Weise in kompakter Bauweise, bei der sich die Getriebeteile innerhalb des Stützenaußenrohrkörpers befinden, erreicht.

Nach einem weiteren erfinderischen Gedanken erfolgt eine Schäftung der, in einer gemeinsamen Achse liegenden, Getriebeeingangswelle und Getriebeausgangswelle in der Nabenbohrung eines diaboloförmigen Radsatzes, wobei an einer Nabe an einem Ende ein durchmessergroßes Zahnrad der zweiten Getriebestufe und am anderen Nabenende ein durchmesserkleineres Kegelrad der Kegelradstufe sitzt und die drei genannten Teile drehfest verbunden oder einstückig sind.

Vorteilhaft können die Nabe und die ein Stück weit in die Nabenbohrung eingesteckte Getriebeausgangswelle mit einander verstiftet werden und die Getriebeeingangswelle kann im anderen Teil der Nabenbohrung drehbar sowie axial verschiebbar gelagert sein.

Erfindungsgemäß ist vorgesehen, daß wenn von der Nabenstirnseite aus eine, die Nabenbohrung vergrößernde konzentrische Einsenkung eingebracht wird, kann ein auf der Getriebeeingangswelle festsitzendes durchmesserkleines Zahnrad, durch Verschieben der Getriebeeingangswelle außer Eingriff gebracht und während der Nichtbenutzung des Handantriebs im Freiraum dieser Einsenkung geparkt werden. Vorteilhaft lässt sich diese Position bzw. die vorherige Eingriffstellung des genannten Zahnrades durch eine quer in der Getriebeeingangswelle zu platzierende Kugelfederrastung und zwei Einrastnuten in der Radsatznabe gegen eine ungewollte Axialverschiebung fixieren. Günstiger Weise entfällt dadurch, die für solche Arretierungszwecke, bisher übliche Anbringung entsprechender Elemente außerhalb des Getriebes.

Eine vorteilhafte Weiterbildung der Erfindung besteht dann, wenn das durchmessergroße Zahnrad der ersten Getriebestufe und das durchmesserkleine Zahnrad der zweiten Getriebestufe mittels einer Vielkeilverzahnung drehfest auf einer Getriebezwischenwelle sitzen, die auf der äußeren Seite den Motorzapfen aufnimmt und in einer Motorlaterne am Stützenaußenrohrkörper gelagert ist.

Beispielsweise kann der Stützenaußenrohrkörper der erfindungsgemäßen Stütze aus einem u-förmig gepressten Mantelblech, dessen Schenkel im größten Bereich seiner Länge untereinander gleichbreit sind und der Breite seines U-Rückens entsprechen, sowie eine Platte als Rückwand, deren Breite größer als der Abstand der Schenkel und die länger als das u-förmige Mantelblech ist, mit den U-Schenkeln des Mantelblechs verschweißt wird. Wenn des weiteren ein kleinerer Endbereich des u-förmigen Mantelblechs so gepresst wird, dass dort bei gleichbreit bleibendem U-Rücken, längere Schenkel entstehen, wobei der U-Rücken tiefer liegt, ergibt sich in diesem Bereich ein querschnittsmäßig rechteckiger Raum im Stützenaußenrohrkörper, der vorteilhafter Weise zum Einbau der Getriebeelemente genutzt werden kann. Und der große Längenbereich des Stützenaußenrohrkörpers, mit quadratischem Innenquerschnitt, kann zur Führung des Stützeninnenrohres dienen. Beiderseits überstehende Bereiche der angeschweißten Rückwand des Stützenaußenrohrkörpers sind, günstiger Weise zur Befestigung der Stütze zu benutzen.

Vorteilhafter Weise ist die Tragplatte, die den rechteckigen Querschnitt des Stützenaußenrohrkörpers ausfüllt einseitig im Bereich der Zahnräder der Getriebezwischenstufe nur örtlich ausgeschnitten, so dass zwei seitliche Restflächen der entsprechenden Seite bis zur vorderen Außenwand des Stützenaußenrohrkörpers reichen. Dadurch kann die Tragplatte an allen vier Seiten tragsicher in den Stützenaußenrohrkörper eingeschweißt werden.

Zur einfachen Montage der Getriebeeingangswelle bietet sich zweckmäßiger Weise an einen ein- und festsetzbaren Lagerkörper mit einem Außendurchmesser, der etwas größer als der Kopfkreis des auf der Getriebeeingangswelle sitzenden durchmesserkleineren Zahnrades ist.

Zur Absicherung, dass der Handantrieb freigeschaltet ist bevor der Motor anlaufen kann, wird ein Endschalter vorgeschlagen, der so angeordnet ist, dass er das auf der Getriebeeingangswelle befestigte Zahnrad in Eingriffstellung abtastet und steuerungsmäßig den Motoranlauf nicht freigibt, wenn besagtes Zahnrad nicht außer Eingriff ist.

Es ist zweckmäßig eine dünne Fettrückhaltewand für den Bereich zwischen der Tragplatte und dem unteren Ende des rechteckigen Querschnittsbereichs des Stützenaußenrohrkörpers vorzusehen, damit eine Fettfüllung des Getriebes nicht entweichen kann.

Für beispielsweise eine paarweise Kombination mit einer Stütze, die lediglich einen Motorantrieb aufweist kann eine andere Ausgestaltungsform der erfindungsgemäßen Stütze, bei der ein Schnellgang für den Handbetrieb vorhanden ist, vorteilhaft sein. Dazu wird vorgeschlagen, vor der bisher als erste Getriebestufe bezeichneten, eine Zahnradstufe vorzusehen, die ein zuschaltbares durchmessergroßes Zahnrad aufweist, welches in Achse der Getriebeeingangswelle gelagert ist und ein durchmesserkleines Zahnrad antreibt, das auf einer Getriebezwischenachse sitzt. Wobei das durchmesserkleine Zahnrad Teil eines weitertreibenden Zahnradblocks sein kann.

Vorteilhafte Ausgestaltungen der Erfindung gehen aus den Unteransprüchen hervor.

Die Erfindung wird anschließend anhand der Zeichnungen erläutert. Es zeigen:
- Fig. 1: einen zentralen Längsschnitt des oberen Bereichs, quer zur Anbaurichtung, der erfindungsgemäßen Stütze,
- Fig. 2: einen etwa hälftigen Längsschnitt analog Fig.1 einer anderen Ausbildungsform und
- Fig. 3: das obere Stück eines Stützenaußenrohrkörpers mit darin sitzender Tragplatte, perspektivisch dargestellt.

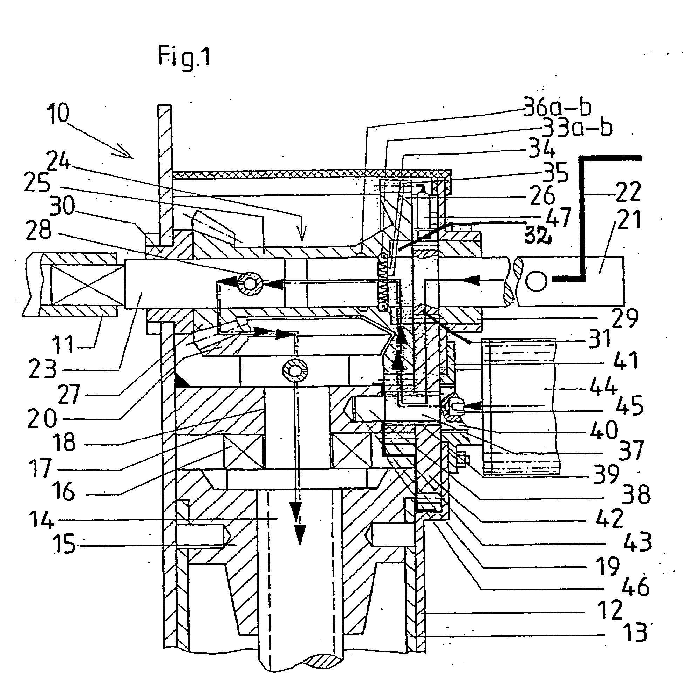

Die in Fig.1 gezeigte Stütze 10 wird paarweise am Rahmen eines Sattelaufliegers in dessen vorderen Bereich befestigt und ist in Transportstellung eingefahren, d. h. in verkürztem Zustand. Bevor der Sattelauflieger vom Sattelschlepper abgekuppelt wird, werden die Stützen 10 ausgefahren.

Da die Stützen 10 eines jeden Paares gleich sind bzw. weil die meistens von einer ersten Stütze 10 aus über eine Verbindungswelle 11 mitangetriebene zweite sich hauptsächlich nur durch ein einfacheres Getriebe, mit lediglich einer Kegelradstufe, von der ersten unterscheidet, genügt es eine antriebseitige Stützen 10 zu beschreiben.

Die Stütze 10 weist einen Stützenaußenrohrkörper 12 und ein darin längsverschieblich gelagertes Innenrohr 13 auf. Der Stützenaußenrohrkörper 12 besteht aus einem u-förmigen gepressten Mantelblech 12a mit einem längeren quadratischem Innenquerschnitt, das im oberen Teilbereich des Rückens tiefer gepresst ist, so dass es dort einen inneren Rechteckquerschnitt aufweist und einer gegen die offene Seite des Mantelblechs 12a geschweißten Rückwand 12b. Der Führungsbereich des Stützenaußenrohrkörpers 12 und das Stützeninnenrohr 13 weisen einen quadratischen Querschnitt auf. Der obere, erweiterte, querschnittsmäßig rechteckförmige Bereich des Stützenaußenrohrkörpers 12 wird als ein Getriebebereich 12d genutzt. Die Stütze 10 wird mit dem Stützenaußenrohrkörper 12 am Rahmen des Sattelaufliegers befestigt. Am unteren Ende des Stützenaußenrohrkörpers 12 ist ein, nicht gezeigter, Fuß zur Abstützung am Boden befestigt. Die Stütze 10 weist eine Spindel 14 mit einer Mutter 15 auf. Auf der Spindelschulter sitzt ein Axiallager 16, das sich an einer Tragplatte 17 abstützt. Die Tragplatte 17 ist mit ihren Einschweißseiten 17a-e an den vier Wänden des Stützenaußenrohrkörpers 12 eingeschweißt. Die Tragplatte 17 besitzt zur Radiallagerung 18 der Spindel 14 eine durchgehende Lagerbohrung 18a und an einer Schmalseite einen mittensymmetrischen Ausschnitt 17f, der etwas tiefer ist als die addierten Breiten später beschriebener Zahnräder. Ferner ist in der Mitte der innersten Fläche des Ausschnitts 17f der Tragplatte 17 eine Sackbohrung 19 zur Lagerung einer, ebenfalls nachfolgend beschriebenen, Getriebezwischenwelle 37 vorhanden. Über der Tragplatte 17 befindet sich auf dem oberen Zapfen der Spindel 14 ein mit dieser verstiftetes durchmessergroßes Kegelrad 20. Im Zentrum der Stütze 10 und oberhalb des Kegelrades 20 befindet sich eine Getriebeeingangswelle 21, die in den Getriebebereich 12d hineinreicht und außen, an der Vorderseite der Stütze 10, übersteht. Am Endbereich der überstehenden Getriebeeingangswelle 21 befindet sich eine abklappbare Handkurbel 22 (in Fig.1 nur schematisch dargestellt). In der selben Achse in der die Getriebeeingangswelle 21 liegt ist eine Getriebeausgangswelle 23 angeordnet, welche von der entgegengesetzten Seite in den Getriebebereich 12d der Stütze 10 hineinragt und quer zum Sattelauflieger, in Richtung der auf seiner anderen Seite montierten Stütze 10 übersteht. Im Endbereich des überstehenden Stücks der Getriebeausgangswelle 23 ist ein Vierkantzapfen vorhanden, auf dem die Verbindungswelle 11 formschlüssig sitzt und worüber die andere Stütze 10 antriebsmäßig angekoppelt ist. Eine diaboloförmige Radeinheit 24, bestehend aus einem Bereich, der als eine Nabe 25 sowie einem Teil als ein durchmessergroßes Zahnrad 26 und einem Bereich der als ein durchmesserkleines Kegelrad 27 ausgebildet ist, schäftet konzentrisch die in das Getriebegehäuse ragenden Stücke der zueinander fluchtenden Getriebeeingangswelle 21 und Getriebeausgangswelle 23. Die Getriebeausgangswelle 23 ist mittels eines Spannstifts 28 im Bereich der Nabe 25 im Radeinheit 24 festgesetzt. Dagegen ist die Getriebeeingangswelle 21 drehbeweglich in der Radeinheit 24 gelagert und axial verschiebbar. Die Getriebeeingangswelle 21 ist außerdem in einem ein- und festsetzbaren Lagerkörper 29 verschiebbar gelagert. Die Lagerung der Getriebeausgangswelle 23 erfolgt in einem Lager 30, welches in der Rückwand 12b des Stützenaußenrohrkörpers 12 sitzt. Auf der Getriebeeingangswelle 21 sitzt ein durchmesserkleines Zahnrad 31.

Bei einem axialen Einschieben der Getriebeeingangswelle 21 kann das Zahnrad 31, von einer Stellung unmittelbar vor der Stirnseite des Zahnrads 26 in eine zweite Stellung innerhalb einer konzentrischen Einsenkung 32 im Bereich des Zahnrads 26, deren Durchmesser und deren Tiefe etwas größer als der Kopfkreis und die Breite des Zahnrades 26 ist, schaltungsmäßig verschoben werden. Und bei einer Umschaltung, durch Ziehen an der Getriebeeingangswelle 21, wird das Zahnrad 31 wieder in die erste Stellung versetzt. In diesen beiden Stellungen erfolgt jeweils eine axiale Arretierung der Getriebeeingangswelle 21. Die Arretierung wird bewirkt von zwei Kugeln 33, welche gemeinsam mit einer zwischen ihnen angeordneten Druckfeder 34 in einer Querbohrung 35 der Getriebeeingangswelle 21 angeordnet sind und fallweise etwa hälftig in die eine oder andere von zwei Radialnuten 36a,36b, die sich innerhalb des Bereiches der Nabe 25 der Radeinheit 24 befinden, gedrückt werden, d. h. einrasten.

Auf einer Achse parallel zu und unterhalb der Getriebeeingangswelle 21 befindet sich eine Getriebezwischenwelle 37, deren Doppelfunktion später beschrieben wird. Diese weist an einem Ende einen durchmesserkleinen Lagerzapfen 38, im Mittelbereich eine etwas durchmessergrößere Vielkeilverzahnung 39 und am anderen Ende einen Kopf als durchmessergroßen Lagerzapfen 40 auf und ist in einer Motorlaterne 41 am Stützenaußenrohrkörper 12 und in der Sackbohrung 19 der Tragplatte 17 gelagert. Auf dem kopfnahen Bereich der Vielkeilverzahnung 39 der Getriebezwischenwelle 37 sitzt drehfest ein durchmessergroßes Zahnrad 42, welches mit dem damit in Eingriff bringbaren Zahnrad 31 zusammenwirkt. Auf der restlichen Vielkeilverzahnung 39 ist ein durchmesserkleines Zahnrad 43 festgesetzt, das in das Zahnrad 26 eingreift. In Achse der Getriebezwischenwelle 37 ist außerhalb des Stützenaußenrohrkörpers 12 ein Motor 44 angeordnet, der über die Motorlaterne 41 am Stüfzenaußenrohrkörper 12 befestigt ist. Der Motordrehzapfen 45 sitzt formschlüssig im Kopf der Getriebezwischenwelle 37. Im Bereich vom Ausschnitts 17f der Tragplatte 17 bis zum unteren Ende des Rechteckquerschnitts des Stützenaußenrohrkörpers 12 ist eine Fettrückhaltewand 46 vorhanden, damit die Zahnräder von einer Fettfüllung des Getriebes gefettet bleiben.

Die Getriebefunktion der Stütze 10 in zweifacher Weise, nämlich im Handbetrieb und dem Kraftbetrieb ist wie folgt:

Beim Betätigen der Handkurbel 22 treibt das Zahnrad 31 das Zahnrad 42 an. Das mittels der Vielkeilverzahnung 39 über die Getriebezwischenwelle 37 mit dem Zahnrad 42 gekoppelte Zahnrad 43 treibt weiter das auf das Zahnrad 26 der Radeinheit 24. Von dem Kegelrad 27 der Radeinheit 24 wird über das Kegelrad 20 die Spindel 14 in Rotation gebracht. Die drehende Spindel 14 bewegt dann die Mutter 15 vertikal. Dadurch gleitet das an der Mutter 15 befestigte Stützeninnenrohr 13 im Stützenaußenrohrkörper 12, abhängig vom Drehsinn an der Handkurbel 22, aufwärts oder abwärts, d.h. es wird aus- oder eingefahren bzw. es wird ein Hub- oder Absenkvorgang mittels der Stütze 10 bewirkt. Der beschriebene Kraftfluss wird in Fig.1 durch einen Volllinienzug mit Pfeilen gezeigt.

Wenn die Stütze 10 in Motorbetrieb gehen soll muss die Handbetriebsmöglichkeit ausgeschaltet werden, damit kein Schaden durch die mitrotierende Handkurbel 22 entstehen kann. Zu diesem Zweck erfolgt ein Freischalten des Zahnrades 31 durch Einschieben der Getriebeeingangswelle 21, wie bereits beschrieben. Das Zahnrad 31 wird dabei außer Eingriff gebracht und taucht in die Einsenkung 32 der Radeinheit 24 ein. Zur Absicherung des Vollzuges dieser Maßnahme ist zwischen der zahnradseitigen Stirnseite der Radeinheit 24 und der vorderen Wand des Stützenaußenrohrkörpers 12 ein auf das Zahnrad 31 in dessen noch nicht freigeschalteter Stellung gerichteter Entschalter 47 vorhanden. Wenn der beschriebene Freischaltvorgang des Zahnrades 31 erfolgt, entfernt sich dieses auch aus dem Abtastbereich des Entschalters 47, der das quittiert und erst damit die Einschaltung des Motors 44 ermöglicht, der sicherheitshalber ohne dieses Signal nicht anlaufen kann. Das Drehmoment des Motors 44 wird in die Getriebezwischenwelle 37 eingeleitet, über deren Vielkeilverzahnung 39 auf das Zahnrad 43 weiter übertragen und das Zahnrad 42 läuft frei mit. Der gesamte Kraftfluss im motorischem Betrieb der Stütze 10 ist in Fig.1 vom Motor 44 aus als strichpunktierter Linienzug mit Pfeilen gezeigt.

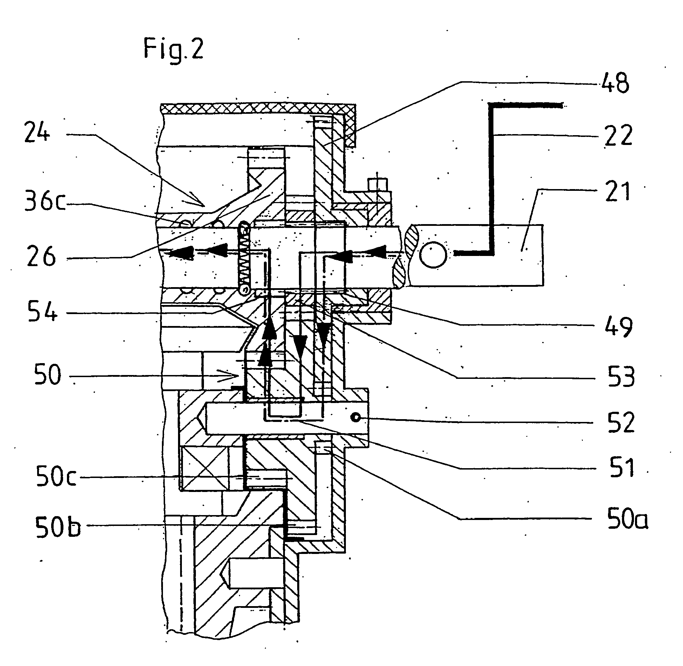

Fig.2 zeigt einen etwa hälftigen Längsschnitt des oberen Bereichs einer alternativen Ausführungsform der Stütze 10. Ein Zahnrad 48, welches auf der Getriebeeingangswelle 21 und im Stützenaußenrohrkörper 12 gelagert ist, wird über eine gemeinsame spielpassende Vielkeilverzahnung 49 mit Getriebeeingangswelle 21 von der Getriebeeingangswelle 21 angetrieben und treibt ein Zahnrad 50a an. Das Zahnrad 50a befindet sich an einem Zahnradblock 50, der auch weitere Zahnräder 50b,50c vereint. Der Zahnradblock 50 ist drehbar auf einer Achse 51, die ein einfacher Bolzen ist, mit einem Spannstift 52 im Stützenaußenrohrkörper 12 festgesetzt. Bei dieser Ausführungsform der Stütze 10 ist auf der Getriebeeingangswelle 21, zwischen dem Zahnrad 48 und der Radeinheit 24, ein Zahnrad 53 angeordnet, das eine innere Vielkeilverzahnung mit zur Vielkeilverzahnung 49 mit Spiel passend, aufweist, damit durch axiales Verschieben der Getriebeeingangswelle 21 deren Vielkeilverzahnung 49 formschlüssig, alternativ in das Zahnrad 48 oder das Zahnrad 53 eingreifen kann. Außerdem taucht nach weiterem Verschieben der Getriebeeingangswelle 21, in einer dritten Schaltstellung, ihr Bereich mit der Vielkeilverzahnung 49 in eine Einsenkung 54 der Radeinheit 24 ein, wodurch die Getriebeeingangswelle 21 freischaltbar ist. Zur axialen Arretierung der Getriebeeingangswelle 21 in der Freischaltposition ist eine zusätzliche Radialnut 36c in der Radeinheit 24 vorhanden. Bei eingeschalteter Koppelung der Getriebeeingangswelle 21 mit dem Zahnrad 48 besteht ein Schnellgang über das Zahnrad 50a usw., der manuell ein schnelles lastfreies Aus- oder Einfahren des Stützeninnenrohres 13 ermöglicht.

Der antriebsmäßige Kraftfluss dieser Ausführungsform der Stütze 10 wird in Fig.2 ebenfalls gezeigt. Der strichpunktierte Linienzug mit Pfeilen kennzeichnet den Kraftfluss im Schnellgang und der mit Pfeilen versehenen Volllinienzug zeigt den Verlauf des Kraftflusses im Lastgang.

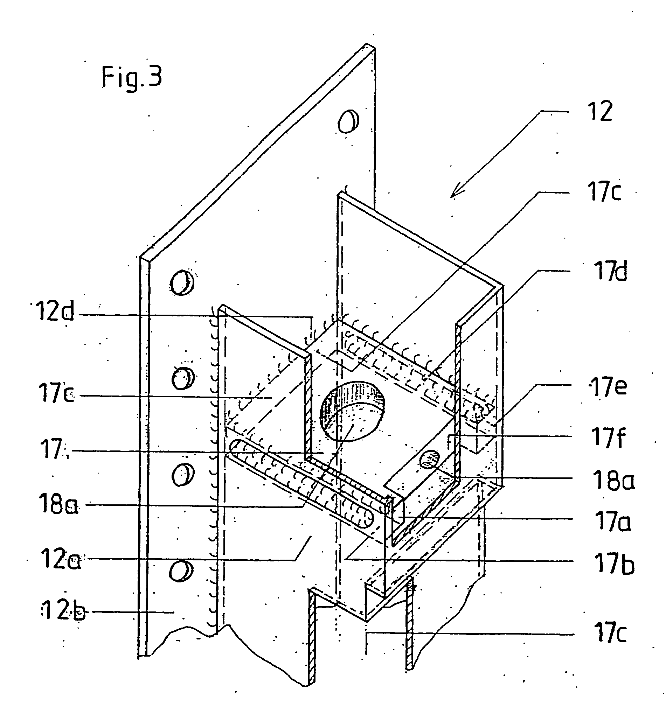

Fig.3 zeigt das obere Stück des Stützenaußenrohrkörpers 12, mit der darin sitzenden Tragplatte 17. Die Tragplatte 17, ist mit ihren Einschweißseiten 17a-e an den vier Innenwänden des Stützenaußenrohrkörpers 12 verschweißt. Ein unterer und ein oberer Ausschnitt dieser perspektivischen Darstellung zeiget den querschnittsmäßig quadratischen Führungsbereich 12c für das Stützeninnenrohr 13 und den darüber befindlichen, nach vorn vergrößerten, im Querschnitt rechteckigen Raum als Getriebebereich 12d. Ebenso ist der Ausschnitt 17f in der Tragplatte 17 als Freiraum für die Zahnräder 42,43/50a-c dargestellt und außerdem ist die Sackbohrung 19 für die Lagerung der Zwischenwelle 37 bzw. Achse 51 zu ersehen.

### Bezugszeichenliste

- 10: Stütze
- 11: Verbindungswelle
- 12: Stützenaußenrohrkörper
- 12a: Mantelblech
- 12b: Rückwand
- 12c: Führungsbereich
- 12d: Getriebebereich
- 13: Stützeninnenrohr
- 14: Spindel
- 15: Mutter
- 16: Axiallager
- 17: Tragplatte
- 17a-e: Einschweißseiten
- 17f: Ausschnitt
- 18: Radiallagerung
- 18a: Lagerbohrung
- 19: Sackbohrung
- 20: Kegelrad
- 21: Getriebeeingangswelle
- 22: Handkurbel
- 23: Getriebeausgangswelle
- 24: Radeinheit
- 25: Nabe
- 26: Zahnrad des Schäftungselementes
- 27: Kegelrad
- 28: Spannstift
- 29: Lagerkörper
- 30: Lager
- 31: Zahnrad der Getriebeeingangswelle
- 32: Einsenkung
- 33a-b: Kugel
- 34: Druckfeder
- 35: Querbohrung
- 36a-c: Radialnut
- 37: Getriebezwischenwelle
- 38: Lagerzapfen
- 39: Vielkeilverzahnung
- 40: Lagerzapfen
- 41: Motorlaterne
- 42: durchmessergroßes Zahnrad
- 43: durchmesserkleines Zahnrad
- 44: Motor
- 45: Motordrehzapfen
- 46: Fettrückhaltewand
- 47: Endschalter
- 48: Zahnrad
- 49: Vielkeilverzahnung der Getriebeeingangswelle
- 50: Zahnradblock
- 50a: zweite durchmesserkleine Zahnrad
- 50b: weiteres, durchmessergrößeres Zahnrad
- 50c: weiteres, durchmessergrößeres Zahnrad
- 51: Achse
- 52: Spannstift
- 53: Zahnrad
- 54: Einsenkung

## Patentansprüche

1. Höhenverstellbare Stütze für Sattelauflieger oder dergleichen, umfassend
- einen ortsfest angebrachten Stützenaußenrohrkörper (12),
- ein Stützeninnenrohr, welches in dem Stützenaußenrohrkörper (12) längsverschiebbar angeordnet ist,
- ein Spindeltrieb (14, 15), welcher in der Stütze gelagert ist und über ein Zahnradschaltgetriebe und eine Kegelradstufe (20, 27) antreibbar ist,
- eine Getriebeeingangswelle (21),
- eine Getriebeausgangswelle (23), an welcher eine weitere Stütze antriebsmäßig ankoppelbar ist,
- wobei die Getriebeeingangswelle (21) und die Getriebeausgangswelle (23) auf derselben Achse liegen,
- wobei die Getriebeausgangswelle (23) drehfest in einem Schäftungselement (24) festgesetzt ist,
- wobei die Getriebeeingangswelle (21) drehbar im Schäftungselement (24) gelagert und axial verschiebbar ist,
**dadurch gekennzeichnet, dass** im Schäftungselement (24) eine Einsenkung (32; 54) vorgesehen ist, so dass bei einem Einschieben eines Zahnrads (31) bzw. einer Vielkeilverzahnung (49) der Getriebeeingangswelle (21) in die Einsenkung das Zahnrad (31) bzw. die Vielkeilverzahnung (49) der Getriebeeingangswelle (21) außer Eingriff gebracht wird.

2. Stütze nach Anspruch 1, wobei das Endstück der Getriebeeingangswelle (21) und das Anfangsstück der Getriebeausgangswelle (23) geschäftet sind, und wobei das Anfangsstück der Getriebeausgangswelle (23) lösbar an der Schäftung befestigt ist.

3. Stütze nach Anspruch 2, wobei die Schäftung des Endstücks der Getriebeeingangswelle (21) mit dem Anfangsstück der Getriebeausgangswelle (23) in dem als diaboloförmige Radeinheit (24) ausgebildetem Schäftungselement erfolgt, das aus einer Nabe (25), einem Zahnrad (26) des Schäftungselementes und einem Kegelrad (27) besteht, wobei diese Teile dreh- und axialfest miteinander verbunden sind.

4. Stütze nach Anspruch 3, wobei die diaboloförmige Radeinheit (24) einstückig ist.

5. Stütze nach Anspruch 3 oder 4, wobei in einer Bohrung der diaboloförmigen Radeinheit (24) mindestens zwei Radialnuten (36a,36b) vorhanden sind, in die mindestens eine in der Getriebeeingangswelle (21) sitzende Kugel (33a) einrasten kann, die mit einer Druckfeder (34) belastet ist.

6. Stütze nach einem der vorhergehenden Ansprüche, wobei das Zahnradgetriebe eine unterhalb der Getriebeeingangswelle (21) gelagerte Zwischenwelle (40) besitzt.

7. Stütze nach Anspruch 6, wobei auf der Zwischenwelle (40) ein, von einem Zahnrad (31) der Getriebeeingangswelle (21) antreibbares, durchmessergroßes Zahnrad (42) und ein ein Zahnrad (26) des Schäftungselements (24) antreibbares, durchmesserkleines Zahnrad (43) drehfest sitzt.

8. Stütze nach Anspruch 7, weiterhin aufweisend einen Motor (44), welcher die Zwischenwelle (40) antreibt und vorzugsweise auf einer zur Getriebeeingangswelle (21) versetzten Achse liegt.

9. Stütze nach einem der Ansprüche 6 - 8, wobei eine vorgelagerte Schnellganggetriebestufe vorgesehen ist, welche aus einem zweiten durchmessergroßen Zahnrad (48) auf der Getriebeeingangswelle (21) und einem zweiten durchmesserkleinen Zahnrad (50a) auf der Achse (51) bzw. der Zwischenwelle (40) ausgebildet ist.

10. Stütze nach Anspruch 9, wobei das Zahnrad (48) der Schnellganggetriebestufe auf der Getriebeeingangswelle (21) und im Stützenaußenrohrkörper (12) gelagert ist.

11. Stütze nach Anspruch 9 oder 10, wobei auf, der Getriebeeingangswelle (21), zwischen dem zweiten durchmessergroßen Zahnrad (48) der Schnellganggetriebestufe und dem Zahnrad des Schäftungselements (26) der Radeinheit (24) ein weiteres Zahnrad (53) platziert ist, welches je nach Schaltstellung der Getriebeeingangswelle (21) mit dieser gekoppelt ist, oder zu der Getriebeeingangswelle (21) eine relative Drehbeweglichkeit aufweist.

12. Stütze nach Anspruch 6, wobei eine Getriebezwischenwelle (37) der Zwischenwelle (40), von der Einbauseite her beginnend, aufsteigende Durchmesserbereiche aufweist.

13. Stütze nach einem der vorhergehenden Ansprüche, wobei die Getriebeeingangswelle (21) einen Bereich mit einer Vielkeilverzahnung (49) aufweist.

14. Stütze nach Anspruch 13, wobei ein in den Stützenaussenrohrkörper (12) einsetzbarer und festsetzbarer Lagerkörper (29) vorhanden ist, dessen Außendurchmesser größer als der Kopfkreisdurchmesser des auf der Getriebeeingangswelle (21) sitzenden Zahnrads (31) der Getriebeeingangswelle bzw. größer als die Vielkeilverzahnung (49) der Getriebeeingangswelle (21) ist.

15. Stütze nach einem der vorhergehenden Ansprüche, wobei der Stützenaußenrohrkörper (12) im oberen Bereich eine durchgehende Querschnittsvergrößerung aufweist.

16. Stütze nach Anspruch 15, wobei der Stützenaußenrohrkörper (12) innen je einen Längenbereich mit quadratischen und rechteckigen Querschnitt aufweist, wobei die Breite des Rechteckquerschnitts der Seitenlänge des quadratischen Querschnitts entspricht und drei Seiten der Querschnitte jeweils in einer Ebene liegen.

17. Stütze nach Anspruch 15 oder 16, wobei der Stützenaußenrohrkörper (12) aus einem gepressten Mantelblech (12a), das einen größeren u-förmigen Längenbereich, bei dem die U-Schenkel und die U-Rückenbreite innen gleichlang sind und einen kurzen u-förmigen Längenbereich aufweist, in dem der U-Rücken tiefer liegt und die U-Schenkel entsprechend länger sind und eine Rückwand (12b) besitzt, gegen die das Mantelblech (12a) mit seiner Schenkelseite verschweißt ist.

18. Stütze nach Anspruch 16 oder 17, wobei im Bereich vom Ausschnitts (17f) einer Tragplatte (17) bis zum unteren Ende des Rechteckquerschnitts des Stützenaußenrohrkörpers (12) eine Fettrückhaltewand (46) vorhanden ist.

19. Stütze nach einem der vorhergehenden Ansprüche, wobei ein Endschalter (47) vorhanden ist, über den die Schaltstellung der Handbetätigung abgefragt wird.

20. Stütze nach Anspruch 1, wobei das zweite durchmesserkleine Zahnrad (50a) und zwei weitere durchmessergrößere Zahnräder (50b, 50c) zu einem Zahnradblock (50) vereint sind, welcher auf der Achse (51) drehbar ist.

## Claims

1. A height-adjustable support for semi-trailers or the like, comprising:
- a stationarily attached support outer tube body (12),
- a support inner tube, which is arranged in the support outer tube body (12) in such a manner that it is slidable in the longitudinal direction,
- a spindle drive (14, 15), which is bearing-mounted in the support and drivable via a switchable gear drive and a bevel gear stage (20, 27),
- a transmission input shaft (21),
- a transmission output shaft (23), at which a further support can be coupled in such a manner that it is drivable,
- wherein the transmission input shaft (21) and the transmission output shaft (23) are located on the same axis,
- wherein the transmission output shaft (23) is fixed in a non-rotating manner in a scarf joining element (24),
- wherein the transmission input shaft (21) is rotatably bearing-mounted in the scarf joining element (24) and axially slidable,
**characterized in that** in the scarf joining element (24) there is provided a recess (32; 54) so that when a gearwheel (31) or a multiple splining (49) of the transmission input shaft (21), respectively, is inserted into the recess, the gearwheel (31) or the multiple splining (49) of the transmission input shaft (21), respectively, is disengaged.

2. The support according to claim 1, wherein the end part of the transmission input shaft (21) and the opening part of the transmission output shaft (23) are scarf-joined and wherein the opening part of the transmission output shaft (23) is releasably attached to the scarf joint.

3. The support according to claim 2, wherein the scarf joint of the end part of the transmission input shaft (21) with the opening part of the transmission output shaft (23) is made in the scarf joining element formed as diabolo-shaped wheel unit (24), which scarf joining element consists of a hub (25), a gearwheel (26) of the scarf joining element and a bevel gear (27), wherein said parts are connected to one another in such a manner that they are non-rotating and axially fixed.

4. The support according to claim 3, wherein the diabolo-shaped wheel unit (24) is single-piece.

5. The support according to claim 3 or 4, wherein there are provided in a bore of the diabolo-shaped wheel unit (24) at least two radial grooves (36a, 36b) in which at least one ball (33a) located in the transmission input shaft (21) may engage, on which ball (33a) a force is exerted by a compression spring (34).

6. The support according to any one of the preceding claims, wherein the gear drive has an intermediate shaft (40) bearing-mounted below the transmission input shaft (21).

7. The support according to claim 6, wherein on the intermediate shaft (40) there are located in a non-rotating manner a large-diameter gearwheel (42) which is drivable by a gearwheel (31) of the transmission input shaft (21), and a small-diameter gearwheel (43) driving a gearwheel (26) of the scarf joining element (24).

8. The support according to claim 7, further comprising a motor (44) driving the intermediate shaft (40) and being preferably located on an axle offset relative to the transmission input shaft (21).

9. The support according to any one of claims 6-8, wherein there is provided a fast-gear transmission stage located upstream, which comprises a second large-diameter gearwheel (48) on the transmission input shaft (21) and a second small-diameter gearwheel (50a) on the axle (51) or intermediate shaft (40), respectively.

10. The support according to claim 9, wherein the gearwheel (48) of the fast-gear transmission stage is bearing-mounted on the transmission input shaft (21) and in the support outer tube body (12).

11. The support according to claim 9 or 10, wherein on the transmission input shaft (21), between the second large-diameter gearwheel (48) of the fast-gear transmission stage and the gearwheel (26) of the scarf joining element of the wheel unit (24), there is placed a further gearwheel (53) which, depending on the switching position of the transmission input shaft (21), is coupled with the same, or is rotationally movable relative to the transmission input shaft (21).

12. The support according to claim 6, wherein a transmission intermediate shaft (37) of the intermediate shaft (40), beginning from the mounting side, has increasing diameter ranges.

13. The support according to any one of the preceding claims, wherein the transmission input shaft (21) has a portion with multiple splining (49).

14. The support according to claim 13, wherein there is provided a bearing body (29) insertable and fixable in the support outer tube body (12), the outer diameter of which bearing body is larger than the crown circle diameter of the gearwheel (31) of the transmission input shaft located on the transmission input shaft (21) or larger than the multiple splining (49) of the transmission input shaft (21), respectively.

15. The support according to one of the preceding claims, wherein the support outer tube body (12) in the upper portion exhibits a continuous increase in cross-section.

16. The support according to claim 15, wherein the support outer tube body (12) inside has respective length portions with a square cross-section and with a rectangular cross-section, respectively, wherein the width of the rectangular cross-section corresponds to the side length of the square cross-section and three sides of the cross-sections lie in one respective plane.

17. The support according to claim 15 or 16, wherein the support outer tube body (12) made from a pressed metal sheet covering (12a) which comprises a larger U-shaped length portion, where the U-legs and the U-back width have the same length on the inside, and a short U-shaped length portion, in which the U-back lies deeper and the U-legs are accordingly longer and a back wall (12b), against which the metal sheet covering (12a) is welded with its leg side.

18. The support according to claim 16 or 17, wherein in the portion from the section (17f) of a carrier plate (17) to the lower end of the rectangular cross-section of the support outer tube body (12) there is provided a fat-retaining wall (46).

19. The support according to any one of the preceding claims, wherein there is provided an end switch (47) by means of which the switching position of the manual drive is retrieved.

20. The support according to claim 1, wherein the second small-diameter gearwheel (50a) and two further larger-diameter gearwheels (50b, 50c) are united to form a gearwheel block (50) which is rotatable on the axle (51).

## Revendications

1. Support réglable en hauteur pour semi-remorques ou similaires, comprenant
- un corps tubulaire extérieur de support (12) monté stationnaire,
- un tube intérieur de support, qui est agencé avec possibilité de translation longitudinale dans le corps tubulaire extérieur de support (12),
- un entraînement à broche (14, 15), qui est monté dans le support et qui peut être entraîné via un mécanisme à engrenages et un étage à engrenages coniques (20, 27),
- un arbre d'entrée de mécanisme (21),
- un arbre de sortie de mécanisme (23) auquel peut être accouplé un autre support en termes d'entraînement,
- dans lequel l'arbre d'entrée de mécanisme (21) et l'arbre de sortie de mécanisme (23) sont disposés sur le même axe,
- dans lequel l'arbre de sortie de mécanisme (23) est immobilisé solidairement en rotation dans un élément d'assemblage d'arbres (24),
- dans lequel l'arbre d'entrée de mécanisme (21) est monté en rotation dans l'élément d'assemblage d'arbres (24) avec possibilité de translation axiale,
**caractérisé en ce qu'**il est prévu un renfoncement (32 ; 54) dans l'élément d'assemblage d'arbres (24) de sorte que lors d'une introduction d'un engrenage (31), ou d'une denture polygonale (49) de l'arbre d'entrée de mécanisme (21) dans le renfoncement, l'engrenage (31) ou respectivement la denture polygonale (49) de l'arbre d'entrée de mécanisme (21) est amené(e) hors d'engagement.

2. Support selon la revendication 1, dans lequel la pièce terminale de l'arbre d'entrée de mécanisme (21) et la pièce initiale de l'arbre de sortie de mécanisme (23) présentent un assemblage de type à mi-bois, et la pièce initiale de l'arbre de sortie de mécanisme (23) est fixée de façon détachable à l'assemblage.

3. Support selon la revendication 2, dans lequel l'assemblage de la pièce terminale de l'arbre d'entrée de mécanisme (21) avec la pièce initiale de l'arbre de sortie de mécanisme (23) a lieu dans l'élément d'assemblage réalisé comme une unité de roue (24) en forme de diabolo, constitué d'un moyeu (25), d'un engrenage (26) de l'élément d'assemblage d'arbres, et d'un engrenage conique (27), les pièces en question étant reliées les unes aux autres solidairement en rotation et solidairement en sens axial.

4. Support selon la revendication 3, dans lequel l'unité de roues (24) en forme de diabolo est d'une seule pièce.

5. Support selon la revendication 3 ou 4, dans lequel au moins deux rainures radiales (36a, 36b) sont prévues dans un perçage de l'unité de roue (24) en forme de diabolo, rainures dans lesquelles peut s'enclencher au moins une bille (33a) logée dans l'arbre d'entrée de mécanisme (21) et chargée par un ressort de compression (34).

6. Support selon l'une des revendications précédentes, dans lequel le mécanisme à engrenages possède un arbre intermédiaire (40) monté au-dessous de l'arbre d'entrée de mécanisme (21).

7. Support selon la revendication 6, dans lequel un engrenage à grand diamètre (42), susceptible d'être entraîné par un engrenage (31) de l'arbre d'entrée de mécanisme (21), est monté solidairement en rotation sur l'arbre intermédiaire (40), et un engrenage à petit diamètre (43), susceptible d'être entraîné par un engrenage (26) de l'élément d'assemblage d'arbres (24) est monté solidairement en rotation sur l'arbre intermédiaire (40).

8. Support selon la revendication 7, comprenant en outre un moteur (44), qui entraîne l'arbre intermédiaire (40) et qui est de préférence située sur un axe décalé par rapport à l'arbre d'entrée de mécanisme (21).

9. Support selon l'une des revendications 6 à 8, dans lequel il est prévu un étage de mécanisme à grande vitesse disposé en amont, qui se compose d'un second engrenage à grand diamètre (48) sur l'arbre d'entrée de mécanisme (21) et d'un second engrenage à petit diamètre (50a) sur l'axe (51) ou respectivement sur l'arbre intermédiaire (40).

10. Support selon la revendication 9, dans lequel l'engrenage (48) de l'étage de mécanisme à grande vitesse est monté sur l'arbre d'entrée de mécanisme (21) et dans le corps tubulaire extérieur (12) du support.

11. Support selon la revendication neufs ou 10, dans lequel, entre le second engrenage à grand diamètre (48) de l'étage de mécanisme à grande vitesse et l'engrenage de l'élément d'assemblage d'arbres (26) de l'unité de roue (24), est placé un autre engrenage (53) qui, selon la position de commutation de l'arbre d'entrée de mécanisme (21), est accouplé avec celui-ci ou bien présente une mobilité relative en rotation par rapport à l'arbre d'entrée de mécanisme (21).

12. Support selon la revendication 6, dans lequel un arbre intermédiaire de mécanisme (37) de l'arbre intermédiaire (40) présente des zones de diamètre croissant, en commençant depuis le côté du montage.

13. Support selon l'une des revendications précédentes, dans lequel l'arbre d'entrée de mécanisme (21) comprend une région avec une denture polygonale (49).

14. Support selon la revendication 13, dans lequel est prévu un corps de palier (29) à mettre en place et à immobiliser dans le corps tubulaire extérieur (12) du support, dont le diamètre extérieur est plus grand que le diamètre primitif de l'engrenage (31) de l'arbre d'entrée de mécanisme calé sur l'arbre d'entrée de mécanisme (21) ou plus grand que la denture polygonale (49) de l'arbre d'entrée de mécanisme (21).

15. Support selon l'une des revendications précédentes, dans lequel le corps tubulaire extérieur (12) du support comporte dans la région supérieure un agrandissement en diamètre continu.

16. Support selon la revendication 15, dans lequel le corps tubulaire extérieur (12) du support présente à l'intérieur une zone en longueur respective avec une section carrée ou rectangulaire, la largeur de la section rectangulaire correspondant à la longueur des côtés de la section carrée, et trois côtés des sections sont respectivement situés dans un plan.

17. Support selon la revendication 15 ou 16, dans lequel le corps tubulaire extérieur (12) du support est réalisé à partir d'une tôle enveloppe (12a) formée à la presse, qui comprend une zone longitudinale longue en forme de U, dans laquelle les branches du U et la largeur du dos du U ont la même longueur à l'intérieur, et une zone longitudinale courte en forme de U, dans laquelle le dos du U est situé plus profondément et les branches du U sont d'autant plus longues, et possède une paroi postérieure (12b) contre laquelle est soudée la tôle enveloppe (12a) par son côté vers les branches.

18. Support selon la revendication 16 ou 17, dans lequel, dans la région partant de la découpe (17f) d'une plaque porteuse (17) jusqu'à l'extrémité inférieure de la section rectangulaire du corps tubulaire extérieur (12) du support, il est prévu une paroi de retenue de graisse (46).

19. Support selon l'une des revendications précédentes, dans lequel est prévu un commutateur de fin de course (47) au moyen duquel la position de commutation de l'actionnement manuel est interrogée.

20. Support selon la revendication 1, dans lequel le second engrenage de petit diamètre (50a) et deux autres engrenages de grand diamètre (50b, 50c) sont réunis en un bloc d'engrenages (50) qui est en rotation sur l'axe (51).
